(19) Europäisches Patentamt
European Patent Office
Office européen des brevets

(11)  **EP 2 711 411 B1**

(12)  **EUROPEAN PATENT SPECIFICATION**

(45) Date of publication and mention
of the grant of the patent:
**04.11.2015  Bulletin 2015/45**

(51) Int Cl.:
$C10L\ 5/46$ (2006.01)    $C10L\ 5/48$ (2006.01)
$B29C\ 47/08$ (2006.01)    $B29C\ 47/92$ (2006.01)
$B29C\ 47/00$ (2006.01)

(21) Application number: **12730590.2**

(22) Date of filing: **18.05.2012**

(86) International application number:
**PCT/ES2012/070353**

(87) International publication number:
**WO 2012/156567 (22.11.2012 Gazette 2012/47)**

(54) **PROCESS AND APPARATUS FOR THE PRODUCTION OF A SOLID FUEL FROM COMBUSTIBLE WASTES**

VERFAHREN UND VORRICHTUNG ZUR HERSTELLUNG EINES FESTEN BRENNSTOFFES AUS BRENNBAREN ABFÄLLEN

PROCÉDÉ ET DISPOSITIF DE PRODUCTION D'UN COMBUSTIBLE SOLIDE À PARTIR DE DÉCHETS COMBUSTIBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.05.2011  EP 11382160**

(43) Date of publication of application:
**26.03.2014  Bulletin 2014/13**

(60) Divisional application:
**15186104.4**

(73) Proprietor: **Carrera Varela, José Antonio
28108 Alcobendas - (Madrid) (ES)**

(72) Inventors:
• **CARRERA VARELA, José Antonio
E-28108 Alcobendas - Madrid (ES)**
• **SARALEGUI GUTIÉRREZ, Alberto
E-28108 Alcobendas - Madrid (ES)**
• **VEGA OTERINO, Juan Alberto
E-28108 Alcobendas - Madrid (ES)**

(74) Representative: **ABG Patentes, S.L.
Avenida de Burgos, 16D
Edificio Euromor
28036 Madrid (ES)**

(56) References cited:
**SU-A1- 1 388 308    US-A- 3 700 247
US-A- 4 632 795    US-A- 5 401 161
US-A- 6 143 219    US-A1- 2004 080 064**

EP 2 711 411 B1

**Description**

Field of the Invention

The present invention relates to the manufacture of solid recovered fuel.

Background

Waste treatment plants incorporate systems which allow recovering recyclable materials such as paper, cardboard, metals, plastics and glass and separating organic matter for treatment, for example, in a composting plant or for biomethanization. These waste selection and separation systems can be automatic or manual. Waste which was unable to be processed by the waste separation methods implemented form the "reject fractions". These reject fractions can be subjected to more waste separation operations which can be automatic or manual. The "reject fractions" are then used in energy recovery or for controlled dumping in deposits especially adapted for this purpose, i.e., sanitary landfills. The presence and maintenance of these landfills entail a high environmental and economic cost for today's society which is generating increasingly more waste.

Solid recovered fuel (SRF) is fuel prepared from non-hazardous waste for the energy recovery thereof in incineration and co-incineration plants, such as industrial furnaces, thermal power stations, or cogeneration plants for example, as well as for the domestic use thereof.

The processes for manufacturing solid recovered fuel used today are usually based on selecting, reducing grain size, drying and pressing the starting materials to obtain a high density heterogeneous material. For convenience in the subsequent transport, storage and use of the fuels, these solids are usually in compacted or densified form, for which the manufacturers add adhesive agents to the mixtures or use thermoplastic materials. In order for the thermoplastic compounds to act as adhesives, agglutinants or binders, temperatures of approximately 200-230°C are needed to melt them. However, heating thermoplastics at said temperatures involves an additional problem, which is that these materials end up adhering to the compression area of the extruders, either to the walls or to the extruder screw, which makes these extruders break down easily. Furthermore, when wood starting materials are used and the process is performed at said high temperatures, the wood materials may be carbonized burnt, which is a drawback and even dangerous.

A drawback of some solid recovered fuels is their high moisture content. Furthermore, most known processes need a prior intensive drying process which reduces the moisture of the starting materials which are to be processed to less than 15% by weight of moisture in order to achieve a drastic moisture reduction in the resulting products compared with that of the starting materials and as a safety measure before grinding and compacting the waste since during compaction and densification there is a high risk of explosion as the steam is compressed in a leak-tight chamber.

A difficulty in current processes is the granulating stage, where the particle size necessary for enabling compaction is between 0.1 and 5 mm, whichever the material. Therefore, all the components must be ground until reaching said grain size.

One drawback of current SRFs is that since they are heterogeneous combusting them leads to excessive environmental pollution in addition to the production of adverse health effects. For this reason energy recovery processes by way of incineration are prohibited in many countries.

Document WO 2010/138514 relates to compacted solid fuel in the form of briquettes or pellets formed by two or more types of particles. At least one type of the particles of the solid is of a material formed by biomass. Other materials which can be used in the other particles of the compacted solid include starch, plastic, fish oil, paraffin, lime, vegetable oil, coffee grounds and animal fat. A binder such as algae or wax, in an amount less than 10% by weight, materials dried to less than 15% moisture and a grain size of between 0.5 and 5 mm, are used for the compaction. The resulting product has a low calorific value, approximately 16.26 MJ/kg, an approximate moisture of 2% by weight and the production of ash is 4% by weight.

Documents EP 1502667 A1 and US 6692544 B1 describe the manufacture of briquettes and pellets from solid urban waste, municipal sewage sludge or waste for the use thereof as solid fuel. It is necessary to dry the starting solid waste before the extrusion process to reduce their moisture to 15-20% by weight. During the processing the extrusion screw is maintained at a temperature of between approximately 121°C and 138°C due to the heat from the friction of the material with the components of the machine and the compression of the entrained air. This process gives rise to briquettes with 4.3% moisture.

Document WO 02/051969 A1 describes the manufacture of briquettes and pellets from 0.5 mm coal particles and up to 30% plastic. In the process, the coal particles are dried and heated, which particles are subsequently used to melt the plastic, which acts as a layer covering the coal particles. The obtained pellets contain 0.46% moisture, 1.58% ash, 36.5 MJ/kg of calorific value and can have up to 1.74% by weight of chlorine.

Document WO 99/20717 A1 describes a process for manufacturing briquettes from combustible materials which partially comprise thermoplastic materials, which act as binders in addition to increasing the energy content of the briquettes. The thermoplastics are added once they are molten, in liquid form, for example as a spray on the rest of the materials before passing to the area for mixing and subsequent formation of the briquettes. This document describes the mentioned drawbacks of heating the compression area when thermoplastics are used. It furthermore describes the existence of projections in the inner walls of the extruder to improve the mixing of the materials.

Document GB 2237028 A1 describes briquettes of a heterogeneous mixture of compressed and pressed materials with a plastic waste content of up to 55% from which PVC has been removed, 40% by weight of wood materials and 5% inert materials with a calorific value of 28 MJ/kg.

Document US 3947255 describes a process for obtaining solid fuel made up of between 60% and 95% bark to which it is necessary to add between 5% and 40% thermoplastic compounds as binders. The solid fuel is obtained by densification in an extruder at a temperature comprised between 121°C and 204°C. Furthermore, to obtain the solid fuel it is necessary to first dry the bark until it contains less than 7% by weight of moisture to prevent the formation of steam in the extrusion process since it can cause explosions.

Document US 2009/0039184 A1 describes a process for processing plastic (12-18%) and non-plastic waste. Said process includes a steam explosion processing which involves adding steam, maintaining the waste at a pressure between 1000-3000 psi and at a temperature between 200-400°C. The extruder screw comprises a screw ""a" designed to allow the passage of steam, assuring sufficient moisture to carry out the process, and a part "b" where the steam explosion process is carried out. In one particular embodiment, a liquid extraction press tapered at its end part can also be used. The solid fuel obtained is not homogenous because the non-plastic part is coated with the plastic components.

Document WO 2010/033017 A1 describes a process as well as an installation for performing said process in which a compression step taking place in an extruder at a temperature between 200 and 290°C is performed to obtain a fuel agglomerate. This document also describes that it is convenient to perform the process in a low oxygen environment so the extruder machine is in an isolated space with low oxygen content.

Document WO 02/051969 describes the manufacture of briquettes and pellets from fine coal particles (below 0.5 mm) and plastic for use as a solid fuel, where the plastic coats the coal particles. After a prior drying, the coal particles and plastic material are mixed and heated (to approximately 204°C) to the plastic melting point (or until they soften) in a mixer. The plastic content of the briquettes and pellets can be up to 30%. It further indicates that the plastic acts as a lubricant in the pellet production process, where a pressure of 600 psi is applied in a press to form said pellets. The strength, integrity and water resistance of the pellets improve with said process.

US 4 632 795 discloses an extruder with a compression core at the final end.

Therefore, taking into account the state of the art it would be convenient to find an improved process for manufacturing SRF in which the starting materials can be used in the form obtained from the waste fractions of the waste separation and classification plants, i.e., without needing the prior drying or grain size reduction steps, without needing to add binders and without the risk of carbonizing, burning the materials or that they adhere to the manufacturing machine due to the process temperature. Furthermore it would be convenient to find a way to recover waste for obtaining energy from same that is not as contaminating and hazardous as the current processes.

Brief Description of the Invention

The present invention presents a homogenization extruder machine according to claim 1, a process for producing solid recovered fuel according to claim 9, a solid recovered fuel which can be obtained by means of said process according to claim 13 and the use of said fuel according to claim 15. The dependent claims define preferred embodiments of the invention.

In a first aspect, the present invention relates to a homogenization extruder machine comprising a main body provided with a feed opening, an extruder screw and an outlet, a compression cone arranged at the final end of the extruder screw and opening and closing means for opening and closing the outlet, characterized in that during a material processing step said closing means close said outlet and force the material being processed to go back and resume the processing step over and over again, wherein said material processing step comprises the rotation of the extruder screw which pushes, rubs together, mixes and grinds all the components while said components advance towards the final end of the homogenization extruder machine and the closing means are selected from the group consisting of a cap, a stopper, a valve, and a metal gate.

The outlet allows the material to exit the machine through the compression cone.

The feed opening allows supplying the starting materials into the machine.

In a preferred embodiment, the homogenization extruder machine comprises means for maintaining and controlling the temperature, preferably means for maintaining and controlling the temperature in the area of the extruder screw and/or in the area of the compression cone.

In one embodiment, the opening and closing means for opening and closing the final end are manual means.

In one embodiment, the opening and closing means for opening and closing the final end are automated means, preferably automated means with a hydraulic, pneumatic or electric system.

In one embodiment, the homogenization extruder machine comprises reinforcement means for reinforcing the compression cone.

In one embodiment, the homogenization extruder machine comprises holes for allowing the exit of gases from the machine. Said holes are preferably arranged close to or in communication with the feed opening to favour the exit of gases and/or steam from inside the machine. Said holes are preferably inner holes which, without allowing a direct exit of the gases from of the machine, allow driving the gases to the area of the feed opening for the exit of the gases through said feed opening.

The homogenization extruder machine of the present invention allows obtaining completely homogenous and preferably water-repellent solid recovered fuel (SRF) from components which come integrally from non-hazardous waste of various origins: urban waste, industrial waste, forest waste and agricultural waste, without needing a prior treatment to reduce the moisture or grain size of the waste and without needing to add an adhesive, agglutinant, or binder or a minimum amount of thermoplastic compounds acting as such.

This machine carries out a process which surprisingly allows converting the selected waste into solid recovered fuel by means of combined grinding, friction and pressing techniques, which can subsequently be moulded into the desired format be it briquettes, pellets, grains, spray, etc. Homogenous SRF can be obtained for any mixture of starting waste if the process is carried out at the temperature and for the time suitable for the composition of the starting materials being processed.

Furthermore, the waste processed by this machine acquires several physicochemical properties which allow, on average, tripling the energy which would be obtained from the untreated waste.

Obtaining a homogenous fuel is important because it allows determining and maintaining the best air/fuel ratio to obtain a complete combustion with maximum efficiency, whereas when the combustion is incomplete the combustion process is less profitable and more contaminating.

Optimizing the combustion process prevents the unnecessarily high use of an excess air which reduces the combustion temperature and increases the amount of unused energy which is dissipated through the large volume of combustion gases. This combustion process optimization also prevents the chosen amount of excess air from being too small which in addition to causing a low fuel performance, increases the adverse environmental impact of unburned waste in combustion gases.

In a second aspect, the present invention relates to a process for producing solid recovered fuel, characterized in that it comprises a step of processing starting materials in a homogenization extruder machine according to the first inventive aspect at a temperature between 200 and 500°C wherein the rotating extruder screw pushes, rubs together, mixes and grinds all the components while they advance towards the final end where there are located the compression cone (11) and the outlet which is closed by the closing means, forcing the material being processed to go back and resume the processing step over and over again, and wherein the starting materials come from the reject fractions of waste treatments and the combination thereof.

In a preferred embodiment, the processing temperature is maintained between 200 and 400°C, more preferably between 225 and 400°C.

In one embodiment, the processing time is comprised between 5 and 59 minutes, preferably between 8 and 35 minutes.

If plastic waste is used as the starting product, the process of the invention prevents its adherence to the walls of the machinery where the process is performed even when it is being heated at high temperatures between 200-500°C. On the other hand, wood materials will not be carbonized or burnt when the machine is operating due to the low oxygen level present in the homogenization process as the gases are expelled.

This process and the machine where it is performed allows processing fractioned landfill waste which can comprise 100% organic waste, 100% inorganic waste (plastic fraction) or any combination thereof.

In a preferred embodiment, the plastic content of the starting materials is at least 40% by weight, whereby a water-repellent solid recovered fuel is obtained.

On the other hand, the process of the present invention enables using starting materials with a high percentage of moisture, eliminating the risk of explosions during the homogenization process, as well as using starting materials with a grain size larger than those used in the state of the art. In other words, according to this process and with the machine of the invention, a treatment for reducing the grain size of the fraction of organic, plastic or reject waste is not necessary, and a prior process for drying or for reducing the moisture of the starting materials is also not necessary, a solid recovered fuel with a very low percentage of moisture being obtained.

It is also disclosed a solid recovered fuel which can be obtained by means of the process according to the second inventive aspect.

It is also disclosed the use of the solid recovered fuel according to the third inventive aspect for domestic use and/or energy recovery, preferably by means of heat treatment processes selected from the group consisting of incineration, co-incineration, pyrolysis, gasification, combined plants and plasma gasification.

These aspects and preferred embodiments thereof are also additionally defined in the claims.

<u>Brief Description of the Drawings</u>

Figure 1 schematically shows the extruder machine with closing means necessary for performing the process for manufacturing solid recovered fuel according to the invention. In the particular embodiment shown in the figure the closing means are a screw cap.

Figure 2 schematically shows the extruder machine once the closing means have been removed by opening means, which allows extracting the solid fuel produced inside the apparatus. In the particular embodiment shown in the figure, it is shown that the closing means have been removed and replaced with a nozzle open to the exterior.

Figure 3 shows the general operation diagram of an urban waste treatment plant with the separation and classification plant, the energy recovery plant and the composting plant.

<u>Detailed Description of the Invention</u>

<u>Homogenization extruder machine:</u>

In one aspect, the present invention relates to a homogenization extruder machine comprising a main body (7) provided with a feed opening (6), an extruder screw (9) and an outlet (14), a compression cone (11) arranged at the final end of the extruder screw (9) and opening and closing means (12) for opening and closing the outlet (14), characterized in that during a material processing step said closing means close said outlet and force the material being processed to go back and resume the processing step over and over again, wherein said material processing step comprises the rotation of the extruder screw which pushes, rubs together, mixes and grinds all the components while said components advance towards the final end of the homogenization extruder machine and the closing means are selected from the group consisting of a cap, a stopper, a valve, and a metal gate.

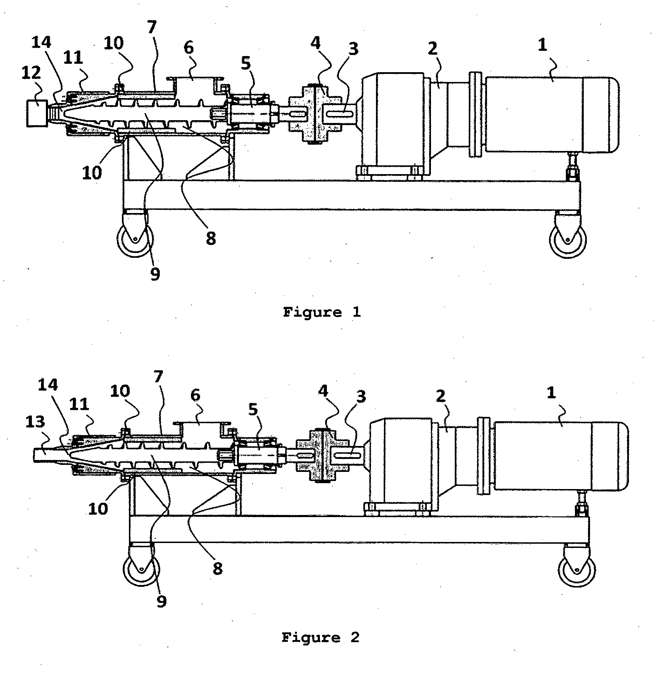

Figures 1 and 2 schematically show an example of the homogenization extruder machine according to the invention. Said machine comprises a main body (7), a motor (1) and a geared motor (2). The geared motor (2) controls the rotation speed and the power of a drive shaft (3) located in an elastic coupling (4) which, attached through the bearing frame (5), makes the extruded screw (9) installed in the main body (7) rotate.

Said motor (1) and geared motor (2) are preferably controlled by control means, they are preferably controlled by a switchboard with a Hertz variator (not shown)

The main body (7) is preferably cylindrical. The main body (7) comprises means for controlling the temperature in the interior (8) of the main body (7). The means for controlling the temperature preferably comprise resistors (10) controlled by a temperature control panel (not shown) the function of which is to keep the temperature in the area of the extruder screw (9) and in the area of the compression cone (11) constant. The temperature is preferably the same in the entire interior (8) of the main body (7).

The main body (7) comprises a feed opening (6) through which the materials will be fed to the interior (8) of the main body by feeding means. In one particular embodiment, the feeding means for feeding the materials is a hopper provided with a feeding screw driven by an electric motor.

The materials are processed in the interior (8) of the main body, where the extruder screw (9) is responsible for pushing, rubbing together, mixing and grinding all the components. The mixture of materials advances due to the force of the extruder screw (9) towards an outlet (14) arranged at the final end of the compression cone (11) which is closed by closing means (12) in Figure 1. The closing means (12) force the mixture of the materials to go back and resume the process over and over again until the conversion of the components into a homogenous product is achieved.

The person skilled in the art knows the means existing in the state of the art for manufacturing and using closing means. The closing means for closing the outlet are linked with the opening means so they can also be referred to as opening and closing means.

In a preferred embodiment, the closing means (12) are a cap or stopper, a valve or any known opening and closing means. In another particular embodiment, the closing means for closing the outlet (14) are formed by a cap made up of a threaded male element and a threaded stopper. In another preferred embodiment, the closing means comprise a metal gate.

The closing means are preferably automated means with hydraulic, pneumatic or electric systems, although they can also be handled manually.

In one particular embodiment, the closing system used is a metal gate, preferably an automated metal gate which is driven by an electric motor moving said metal gate.

The main friction forces are exerted in the area of the compression cone (11), therein being a high compression. In a preferred embodiment, this area of the compression cone (11) comprises reinforcing means for reinforcing the structure of the machine to withstand the high compression forces since the system has to be capable of withstanding a pressure greater than that exerted by the mixture on the closing system. The compression cone (11) is preferably reinforced by means of metal brackets.

In a preferred embodiment, the homogenization extruder machine has means for maintaining and controlling the temperature, preferably for maintaining and controlling the temperature in the area of the extruder screw and/or in the area of the compression cone.

Once the different materials have been processed and converted into a solid fuel made up of a single homogeneous phase, the outlet closed by closing means is opened to the exterior by opening means for opening the closed outlet. These opening means for opening the closed outlet are optionally manual means or automated means with a hydraulic, pneumatic or electric system. In a particular embodiment wherein the closing means (12) are a cap or stopper, they are opened. In another particular embodiment, the closing means (12) are removed and replaced with a nozzle (13) shown in Figure 2. In another preferred embodiment, wherein the closing means are a metal gate, they are opened or removed.

During the process for obtaining the homogenous solid, the gases formed as a result of the heating and compression of the material driven towards the end of the closed extruder screw escape through the compartment towards the beginning of the extruder screw, exiting through the feed opening (6). A section of the extrusion machine optionally has grooves or holes to allow the exit of gases and steam formed by the evaporation of the residual moisture contained in the material. Said grooves or holes are preferably located such that they drive the gases and steam towards the area of the feed opening (6), thus facilitating their extraction. In a particular embodiment, there is a fume hood located over the extruder machine, it is particularly located above the feed opening (6).

Solid recovered fuel (SRF):

The process of the present invention allows obtaining a solid recovered fuel.

As has been discussed above, the term "solid recovered fuel" or SRF refers to a solid fuel obtained from non-hazardous waste. Advantageously, the SRF obtained by means of the machine and the process of the invention complies with the European standards specified by the European Committee for Standardization (CEN).

Advantageously, the solid recovered fuel obtained by means of the machine and the process of the invention is homogenous. In the scope of the present invention, "homogenous" means that the intensive properties of the solid fuel are maintained, obtaining a single phase which can be seen with naked eyes. Intensive properties are those which do not depend on the amount of substance or on the size of a system, so their value remains unchanged when the initial system is subdivided into several subsystems. Non-limiting examples of intensive properties which can be observed in the solid fuel of the present invention are the specific heat, the density, the hardness, the concentration, the melting point, the ductility or the malleability. The person skilled in the art understands that homogenization makes sense when the starting materials are heterogeneous.

In a preferred embodiment, the homogenous SRF obtained is also water-repellent when the plastic content of the starting materials is at least 40% by weight. The term "water-repellent" refers to the fact that the material of the present invention prevents moisture or filtrations. This property is furthermore observed in 100% of the material. Tests have been performed wherein the solid fuel produced by means of the machine of the invention with a plastic content of at least 40% by weight is submerged in water for time periods comprising 1 hour to 2 weeks, no variation in the weight of the solid being observed, which indicates that it is water-repellent as well as biologically inert. In the state of the art, for example in the case of documents EP 1502667 A1 and US 6692544 B1 which contain 5.7% plastic, the briquette only acquires said properties in its perimeter. Upon cutting the briquette, the material located inside it does not have water-repellent properties, it is simply a pressed heterogeneous mixture.

The SRF obtained by the process of the present invention acquires its density during the conversion process and not during its pressing.

Evidently, the composition and the characteristics of the SRF will be conditioned by the type of starting materials or waste being processed and their percentage. Even so, the composition of urban waste is generally stable enough and the composition of the different fractions obtained from waste treatment plants is very well defined. The percentage of said composition varies according to the countries, regions, economic level and time of the year in which they are generated. Therefore, it is possible to establish a product specification for any waste flow after performing several samplings.

Process:

The characterizing step of the present invention is the step of processing or converting the starting materials or waste in the homogenization extruder machine of the invention, the outlet (14) of which is closed at its final end at a temperature between 200 and 500°C. In a preferred embodiment, the materials are processed at a temperature between 200 and 400°C, more preferably between 225 and 400°C. The temperature used in the process depends on the materials to be treated and on the production needs, i.e., the greater the temperature, the shorter the process time and the greater the energy consumption. These temperatures ranges favour the homogenization of the materials to obtain a homogenous SRF.

The time necessary for the homogenization of the materials in the extruder according to the present invention depends on the composition of the starting materials and the amount thereof to be processed as well as on the temperature of the process and production needs. However, the defined temperature ranges assure the production of a homogenous SRF regardless of other factors.

Preferred, non-limiting processing times for the process of the invention vary between 5 and 59 minutes, preferably between 8 and 35 minutes. For processing a certain composition of materials, the processing time for the homogenization varies depending on the temperature of the process, shorter times are needed for higher temperatures and longer times are needed for lower temperatures. For example, in a particular embodiment, if the temperature of the process is 290°C, the duration of said process is 10 minutes, however, when the temperature of the process is 240°C the duration of the process is 15 minutes. On the other hand, the compositions with a greater proportion of organic fraction require more processing time than those having a greater proportion of inorganic fraction due to the greater amount of steam needed to be evacuated in the homogenization process.

In this material processing step, when rotated the extruder screw pushes, rubs together, mixes and grinds all the components while they advance towards the final end where there are located a compression cone and an outlet which is closed by closing means during this waste processing step, forcing the material being processed to go back and resume the process over and over again, allowing the conversion of the starting materials into a homogeneous product if the process is performed at the suitable temperature and for suitable the time.

In this homogenization step, the filling of the interior (8) of the main body of the extruder machine with starting materials can be variable.

Other steps which may be present in the process of the present invention before the processing phase in the homogenization extruder machine are those common in processes for obtaining SRF known in the state of the art:

- Collecting the materials:
  The starting materials are preferably collected separately or, more preferably, the extruder is placed in a controlled landfill or in a waste treatment plant providing all the waste which can be used to prepare the SRF, variations thereof being manufactured depending on the available waste; or the extruder is placed in a package selection plant to enable using the reject fraction of said plant as a raw material.
- Classifying the materials:
  The materials are separated and/or selected and stored according to their composition according to the techniques known in the state of the art. The classified or non-classified starting materials which can be used in the present invention are described below.
- Drying the materials:
  This step is generally unnecessary because the homogenization extruder machine of the present process allows using compositions of starting materials with up to 80% moisture and the starting materials in the scope of the present invention do not usually have so much moisture since they have previously been treated, separated and classified. This involves an improvement in production times since a common step in processes for obtaining SRF is avoided.
  The process described in the present invention allows significantly reducing the moisture of the resulting product in comparison with the starting materials, therefore, it is only necessary to dry the compositions having moisture greater than 80% by weight due to safety reasons. If necessary, the drying process can be performed by any method known in the art such as, for example, rotary dryers, use of the residual combustion heat of an installation, air-drying or exposure to the sun. Once the different materials are classified according to their composition and have the moisture necessary for being processed by the apparatus, they can be stored in silos.
- Mixing:
  Different waste or fractions from the waste treatment plants can be mixed according to the proportions determined by the product specification, by the multiple means existing in the state of the art, for example vibrating tables, mixing silos, machined hoppers, worm screws, etc. This step is optional because a mixture of several types of waste fraction or a single type of waste fraction which would not need to be mixed can be used in the present invention.
- Feeding the extruder screw:
  The materials can be fed to the main body where the extruder screw is located by any method known by the person skilled in the art.
  Once the mixture, which is made according to the percentages of the formula resulting from the product specification, is ready, it is gradually introduced in the machine of the invention in the interior (8) of the main body (7) where the extruder screw is placed or in a feeding chamber of the interior of the main body. In one particular embodiment, the starting materials are introduced until filling the main body (7) where the starting material processing or conversion step takes place.

The main body (7) is provided with an opening (6) through which the materials are introduced to the interior (8) of the main body by any feeding means known by the person skilled in the art. In one particular embodiment, the feeding system is a hopper provided with a feeding screw driven by an electric motor.

After the starting material processing or conversion step, the outlet located at the final end of the main body of the extruder and closed by closing means during said step, is open in an opening step by opening means, creating an exit so that the homogenous SRF obtained can exit. In other words, the interior (8) of the main body (7) of the machine of the invention is connected with the exterior through the outlet (14) arranged at the final end of the compression cone (11), allowing the homogenous solid recovered fuel obtained in the form of amorphous solid to exit the machine. The closing and opening means can be manual or automated by means of a hydraulic, pneumatic or electric system.

The solid obtained from the previous step can be compacted in an additional step to give it the desired shape and size, for example briquettes or pellets, by any known method, normally by means of a mould and/or a press. As has been mentioned above, the material is not densified in this step, rather the density is given by the starting material conversion process itself.

Once SRF with the desired shape and size is obtained, it can be stored and transported.

Starting materials:

The starting materials used in the present invention are waste. In one particular embodiment, this waste preferably comes from the reject fractions of waste treatment plants, preferably from the reject fractions of solid urban waste treatment plants. In another embodiment, the waste comes from the reject fractions of factories, for example: factories of diapers, sanitary napkins and bandages or of the wood transformation industry; mattresses; garbage bags from the reject fraction of landfills; straw; and paper and cardboard waste; waste from the food sector industries; and/or forest waste from the maintenance and cleaning of woodlands, scrublands, parks and gardens.

"Waste" is understood as any substance or object which is disposed of by its owner or which he or she intends or is obliged to dispose of. In any case, the waste included in the European Waste Catalogue (EWC), approved by the Community Institutions contemplated in Decision 2000/532/EC, will have this consideration. Furthermore, "urban or municipal waste" is understood as that generated in private homes, shops, offices and services, as well as that which is not qualified as hazardous and which, due to its nature or composition, can be assimilated to that produced in the previous places or activities. The following waste will also be considered as urban waste: waste from cleaning thoroughfares, green areas, recreational areas and beaches; dead domestic animals, as well as furniture, mattresses and fittings; waste and debris from minor works of construction and domestic repair.

The waste used in the present invention does not comprise petrous materials, or ferrous or non-ferrous metals, or materials containing substances considered to be hazardous. The possibility of allowing at most 5% by weight of the SRF obtained being petrous materials and ferrous or non-ferrous metals is contemplated in the scope of the present invention due to the extreme difficulty of completely separating said materials. Said circumstance further means that the content of starting materials which may contain substances considered to be hazardous is at most 0.5% by weight of the SRF obtained, although it preferably allows at most 0.3% by weight of materials containing substances considered to be hazardous.

The materials used in the examples of the present invention preferably come from waste treatment plants. These plants incorporate several systems which allow recovering the recyclable materials (paper, cardboard, metals, plastics and glass) and separating the organic matter for treatment (for example in a composting plant or for biomethanization), resulting in what is known in this invention as "fractions of waste separation" resulting in the paper fraction, cardboard fraction, metal fraction, inorganic fraction or "plastic fraction" and the "organic fraction".

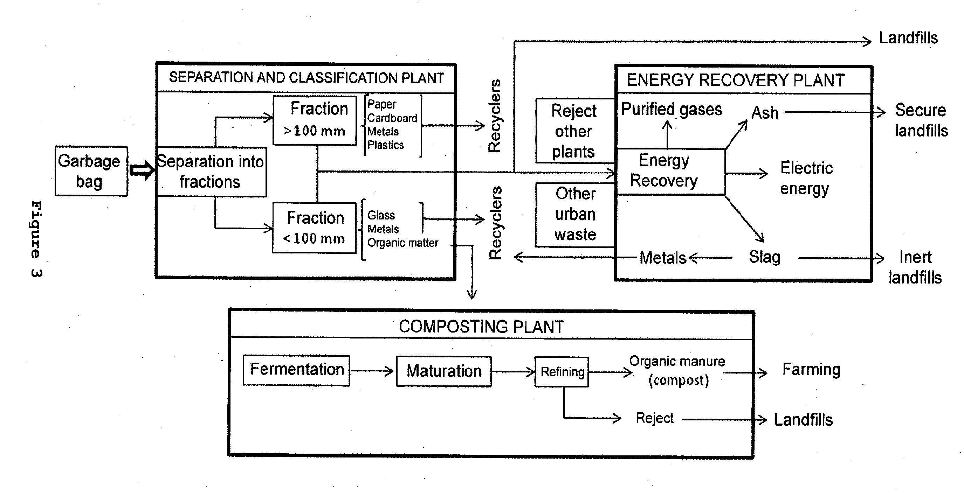

These waste treatment systems can be automatic or manual. As seen in Figure 3, all the waste which was not able to be processed by the methods implemented for separating and selecting the waste mentioned above form the "reject fractions". Furthermore, more waste separation operations, which can be automatic or manual, can be performed on these reject fractions by triage (with low efficiency) or optical separation (with high efficiency). The "reject fractions" is then used in energy recovery or for the controlled dumping in deposits especially adapted for this purpose, i.e., landfills.

In the present invention the term "inorganic fraction" or "plastic" refers preferably to thermoplastic materials, except those containing chlorine, such as polyvinyl chloride and polystyrenes, due to the fact that they are considered to be hazardous waste since they are highly polluting in the incineration process. The term "thermoplastic" refers to a plastic which is deformable at room temperature and which melts when it is heated and hardens into a vitreous state when it is sufficiently cooled. In the scope of this invention, the plastic of the starting material is preferably selected from materials comprising high-density polyethylene (HDPE), low-density polyethylene (LDPE), polypropylene (PP), polyethylene terephthalate (PET), polyurethane (PUR), polymethylmethacrylate (PMMA), cellulose nitrate, cellulose acetate, cyclic olefin copolymer (COC), ethyl vinyl acetate (EVA), ethyl vinyl alcohol (EVOH), polyacetal, polybutadiene (PBD), polybutylene (PB), polybutylene terephthalate (PBT), polycaprolactone (PCL) or acrylonitrile butadiene styrene (ABS), the plastic is preferably selected from materials comprising high-density polyethylene, low-density polyethylene, polypropylene, polypropylene terephthalate or polyurethane. These plastics can come from, for example, waste of containers or packagings, from construction, from the automotive or electronics fields, which were able to be selected, for example, in an urban waste treatment line for plastic separation or from a container selection and classification line. After separating waste in a trommel, the end of line reject fraction is considered an "inorganic reject fraction" because it has a high percentage of plastics.

In the present invention the term "organic fraction" refers either to the organic matter separated in the separation and classification plant (see Figure 3), to the compost of the composting plant or to the reject fraction, also known as "organic reject fraction", of the composting plant which ends up in the landfill, or to a combination of any of the above.

The solid fuel manufactured by the process of the present invention comprises between 0 and 100% by weight of plastic fraction or by weight of plastic. In one particular embodiment, it comprises between 3 and 97% by weight of plastic fraction or by weight of plastic. In another particular embodiment, the SRF comprises between approximately 40% and 85% by weight of plastic fraction or by weight of plastic. Particularly, the plastic content which has been characterized in the waste of the landfills used for obtaining the solid recovered fuel of some of the examples consists of 3.75% of plastic in the "organic reject fraction" and 24% of the total in the end of line rejects. The examples of the present invention also describe SRF obtained from 80% plastic. Therefore, any 100% organic fraction, 100% inorganic (plastic) fraction, as well as a combination thereof can be processed in the process of the present invention regardless of their percentage. In one embodiment, the starting materials come from the "fractions of waste separation" and/or from the combination thereof. In a preferred embodiment, the starting materials come from the reject fractions of waste treatment and/or from the combination thereof. Therefore, since the starting materials come from fractions of waste separation, it is understood in a preferred embodiment that the starting materials are heterogeneous.

As used herein, the term "approximately" means a slight variation of the specified value, preferably within 10 percent of the specified value. Nevertheless, the term "approximately" can mean a greater variation tolerance depending on the experimental technique used, for example. The skilled person understands said variations of a specified value and the latter are within the context of the present invention. Furthermore, to provide a more concise description, some of the quantitative expressions provided herein are not qualified with the term "approximately". It is understood that, whether or not the term "approximately" is used explicitly, each amount given herein intends to refer to the real given value and also intends to refer to the approximation of such given value which would be reasonably deduced based on the common experience in the art, including equivalents and approximations due to the experimental and/or measurement conditions for such given value.

The following examples are merely illustrative of certain embodiments of the invention and in no case must they be considered as limiting.

Examples

Example 1. Solid fuel sample PLAS-MA 34.

CHARACTERIZATION PROCESS

On the day the sample is received, the material received of each sample is dried to determine its moisture. The different fractions which are used in the analytical processes, generally with a grain size less than 0.5 mm, are obtained by sampling and grinding, following Technical Specification CEN/TS 14780 *"Solid Biofuels - Methods for sample preparation".*

The analytical methodology used, based on the laboratory analysis processes, is briefly summarized below. The tests are generally performed in duplicate.

Total moisture: It is performed by means of the process for determining the total moisture in biomass, based on the loss of mass of the sample until reaching a constant value when it is heated at 105°C. The process is derived from Technical Specification CEN/TS 14774-2 "Solid Biofuels - Methods for the determination of moisture content - Oven dry method - Part 2: Total moisture - Simplified *method".*

Mechanical durability of pellets: Mechanical durability is the measurement of resistance of densified biofuels to blows and/or to friction. The method followed is based on Technical Specification CEN/TS 15210-2 *"Solid Biofuels - Methods for the determination of mechanical durability of pellets and briquettes - Part 1: pellets"* which consists of overturning them in a rotary drum. The durability is expressed as the ratio between the material contained in the vessel at the end of the test, without disintegrating, and the total initially introduced. Fines: Before determining the durability, the fines content is determined, manually sieving (3.15 mm mesh) a representative fraction of pellets.

Particle density (stereometric method): The particle density is determined by means of measuring the dimensions of the pellets for the purpose of knowing their volume. Ten replicas are performed for each sample of biomass pellet. The process is derived from Technical Specification CEN/TS 15150 *"Solid Biofuels - Methods for the determination of particle density"*.

Length of pellets: The internal process is based on reducing the original sample of pellets to an approximate amount of 20 pellets by means of successive quarterings, longitudinally and individually measuring each pellet of the sample considered to be representative of the set, and taking the mean value as an estimate of the length of the set.

Ash 550°C: It is performed by means of a process of calcination and determination of the ash content at 550°C. It is based on the combustion of the biomass by means of heating ramps set to 550°C, for the purpose of preventing the decomposition or vaporization of certain compounds. This process is derived from Technical Specification CEN/TS 14775 *"Solid Biofuels - Method for the determination of ash content"*. The ash obtained in this test is used to perform the analysis of major and minor elements in ash (calcium, potassium, phosphorus, sulphur, iron, aluminium, magnesium, sodium, silicon, etc.).

Volatile matter 900°C: It is based on heating the biomass under established conditions to 900°C and in the absence of air. This process is derived from Technical Specification CEN/TS 15148 "Solid *Biofuels* - Method for the determination of the content of volatile matter*".*

Elemental analysis:

• Carbon (C), hydrogen (H), nitrogen (N)

It is performed by means of the internal process for the determination of carbon, hydrogen and nitrogen in biomass using a TruSpec elemental analyzer (Leco). It is based on the catalytic combustion of the biomass sample with pure oxygen and at 950°C to achieve a very fast combustion. After different treatments the gaseous combustion products are homogenized in a tank referred to as a ballast tank. Subsequently, two infrared detectors measure the carbon and the hydrogen of the generated gases and finally and after different reduction and cleaning treatments, the nitrogen is determined in a 3 ml aliquot using a thermal conductivity detector. The internal process is derived from Technical Specification CEN/TS 15104 "Solid *Biofuels* - Determination of total content of carbon, hydrogen and nitrogen - Instrumental method*".*

• Chlorine (Cl) and sulphur (S)

The determination of the chlorine and sulphur is performed by ionic chromatography, after the recovery in aqueous solution of the chlorine and sulphur compounds coming from the calorimetric pump used to determine the calorific value of the sample. This process is derived from Technical Specification CEN/TS 15289 "Solid Biofuels - Determination of total content of sulphur and chlorine*".*

Calorific value in dry base:

Higher calorific value. It is determined following the internal process for the determination of the calorific value in biomass using automatic calorimeters of the LECO AC-300 or IKA C-5000 brand, performing the combustion of the biomass with excess oxygen under controlled conditions. The higher calorific value is calculated from the temperature measurements taken before and after the combustion. This process is derived from experimental standard UNE 164001 EX "Biosolid fuels: method for the determination of calorific value".

Lower calorific value. It is calculated by subtracting from the higher calorific value in dry base the heat of vaporization of the water formed in the combustion of the biomass, based on the hydrogen content of the hydrocarbon matter of the dry biomass. The formula indicated below is applied:

$$LCVo = HCVo - 206.0*H$$

where:

LCVo = lower calorific value in kJ/kg of biomass with zero moisture.
HCVo = higher calorific value (determined by the calorimeter) in kJ/kg of biomass with zero moisture.
H = hydrogen content of the biomass in% dry base.

Calorific value in wet base:

Higher calorific value. It is calculated from the higher calorific value in dry base and from the moisture of the sample by means of the following formula:

$$HCVx = HCVo * (1-0.01*X)$$

where:

HCVx = higher calorific value in kJ/kg with moisture X.
X = moisture of the biomass in% wet base.

Lower calorific value. It is calculated from the higher calorific value, taking into account that the water present at the end of the combustion has a double origin: a) the water due to the moisture of the biomass present in the wet biomass and b) the water formed from the hydrogen of the hydrocarbon chains forming the biomass. The following formula is applied:

$$LCVx = HCVx - 23.05*(X + 8.9364*H*(1-0.01*X))$$

where:

LCVx = lower calorific value in kJ/kg with moisture X.

Analysis of inorganic elements in biomass and in biomass ash (Al, Ca, Fe, K, Mg, Na, P, S, Si, Ba, Mn, Sr, Ti and Zn)

It is based on the digestion in a microwave oven of the ash obtained at 550°C or directly from the biomass itself following Technical Specification CEN/TS 15290 *"Solid Biofuels - Determination of major elements"*. The digested samples are analyzed by means of inductively coupled argon plasma atomic emission spectroscopy, by means of a simultaneous spectrometer of the THERMO JARRELL ASH brand, model IRIS AP. The calculation for converting the results analyzed on ash to biomass, or vice versa, is performed according to the formula:

$$\%ELEMENTbiomass =\%ELEMENTash * 0.01 *\%ash$$

This formula is generally not valid for sulphur, since it is usually partially lost during the calcination.

Fusibility

This test is performed on ash calcined at 550°C and ground to less than 0.250 mm. A cylindrical tablet of 3 mm in diameter by 3 mm in height is prepared. Said sample is introduced in the oven of a LEICA brand optical heating microscope, where a beam of light impinges on the tablet, thus reflecting its silhouette. The temperature programme of the oven is:

- From room temperature to 550°C, 60°C per minute ramp
- From 550°C to 1400°C, 10°C per minute ramp

A digital camera records a video with images of the silhouette of the tablet as the temperature of the oven increases. At the same time, the programme automatically records different dimensional parameters (shape factor, corner angles, etc.), which are used to determine four characteristic temperatures:

- Initial deformation temperature (IDT).
- Sphere temperature (ST).
- Hemisphere temperature (HT).
- Fluid temperature (FT).

This internal process is derived from Technical Specification CEN/TS 15370-1 *"Solid Biofuels - Methods for the determination of ash melting behaviour".*

STARTING MATERIALS

70% of the weight in PP and HDPE.
20% of the weight in wood (40% pine wood shavings, 60% chips).
10% of the weight in straw.

These materials were processed for 12 minutes at 280°C.
RESULTS OF CHARACTERIZATION OF THE SOLID FUEL.

Moisture (% wet base) 0.2
Length (mm) 27
Part. density. Geom. (kg of wet biomass/m$^3$) 850
Mechanical durability (%) 99.9
Fines (%) 0.0

IMMEDIATE ANALYSIS (% dry base)

Ash (550°C) 0.5
Volatile matter 94.6
Fixed carbon 4.9

ELEMENTAL ANALYSIS(% dry base)

Carbon 73.2
Hydrogen 11.0
Nitrogen 0.40
Sulphur 0.01
Chlorine 0.02
Fluorine <0.01
Bromine <0.01

CALORIFIC VALUE (MJ/kg)

HCVv,0 (moisture= 0.0% w.b.) 36.72
HCVv,x (moisture= 0.2% w.b.) 36.65
LCVv,0 (moisture= 0.0% w.b.) 34.45
LCVv,x (moisture= 0.2% w.b.) 34.39

MINOR ELEMENTS (% dry base, analyzed as elements and expressed as oxides)
Al 2.2, $Al_2O_3$ 4.2, Ba 0.062, BaO 0.069, Ca 14, CaO 20, Fe 2.5, $Fe_2O_3$ 3.6, K 8.6, $K_2O$ 10, Mg 4.3, MgO 7.2, Mn 0.41, $Mn_2O_3$ 0.78, Na 1.0, $Na_2O$ 1.4, P 1.4, $P_2O_5$ 3.3, S 1.0, $SO_3$ 2.6, Si 15, $SiO_2$ 32, Sr 0.050, SrO 0.059, Ti 0.35, $TiO_2$ 0.59, Zn 0.11, ZnO 0.14. Sum 85.9
FUSIBILITY. Characteristic temperatures (°C)

Initial deformation: 1160°C
Sphere: n.d. (not detected)
Hemisphere: 1190°C
Fluid: 1200°C

In summary: HCV 36.70 Mj/kg; LCV 34.39 Mj/kg; Chlorine (Cl) s/MS 0.02%; Mercury (Hg) 0.00046 mg/MJ, moisture 0.2%, ash 0.5%, durability 99.9%, fuel yield 93.8%. In other words, all the requirements demanded by Standard 343 to classify SRF PLAS-MA 34 as a class 1 fuel, particularly a class 111 fuel, are met. Furthermore, these data show that the characteristics of the fuel obtained are suitable for being used in the industrial sector, being virtually innocuous for the environment.

Example 2. COLCH-PLAS 30

STARTING MATERIALS

30% by weight of mattresses from landfills.
30% by weight of garbage bags from the reject fraction of landfills.
20% by weight of plastic packagings from landfills.
20% by weight of pine wood shavings from the wood transformation industry.

These materials were processed for 13 minutes at 290°C.

ELEMENTAL ANALYSIS (% m/m)

Carbon. C. 62.66%
Hydrogen. H. 8.66%
Nitrogen. N. 1.79%
Sulphur. S. 0.09%

CALORIFIC VALUE. (MJ/Kg)

HCV 29.30 MJ/Kg.
LCV 27.52 MJ/Kg.
Density 388.60 kg/m3
Ash content 4.3% (m/m)
Chlorine content 0.12%
Moisture 0.3% (m/m)

FUSIBILITY. Characteristic temperatures (°C)

Initial deformation: 1192°C
Sphere: 1408°C
Hemisphere: 1418°C
Fluid: 1431°C

| Test | | Result |
|---|---|---|
| Analysis of ash by X-ray diffraction (%) | $SiO_2$ | 0.8 |
| | $CaF_2$ | 1.2 |
| | Cr | 1.5 |
| | Si | 0.5 |
| | $SiO_2$ | 1.0 |
| | $CaCO_3$ | 20.1 |
| | $TiO_2$ | 1.9 |
| | $AlLiSiO_4$ | 0.8 |
| | $CaMgSi_2O_6$ | 11.2 |
| | $Ca_3SiO_5$ | 25.9 |
| | $MgTi_2O_5$ | 1.1 |
| | $Tl_2S$ | 1.0 |
| | $Sb_2S_3$ | 1.9 |
| | $AlKSi_3O_8$ | 14.2 |
| | $Fe_2FPO_4$ | 9.9 |
| | Amorphous bodies | 7.0 |

Metal content on ash by ICP (%)

| Al | As | Ca | Cd | Co | Cr | Cu | Fe | K |
|---|---|---|---|---|---|---|---|---|
| 2.21 | <L.D | 29.46 | <L.D | 0.01 | 0.08 | 0.08 | 1.91 | 2.53 |

| Mg | Mn | Mo | Na | Ni | Pb | Ti | V | Zn |
|---|---|---|---|---|---|---|---|---|
| 1.40 | 0.06 | 0.01 | 2.94 | 0.01 | 0.06 | 0.30 | 0.0 1 | 0.38 |
| <L.D., below the limit of detection. | | | | | | | | |

Example 3. COMP-MA 32

STARTING MATERIALS

40% by weight of PP and HDPE.
20% by weight of paper and cardboard.
20% by weight of pine wood chips and shavings.
20% by weight of sanitary napkins, diapers and bandages.

These materials were processed for 16 minutes at 245°C.

ELEMENTAL ANALYSIS OF THE SRF OBTAINED

| TEST | | UNIT | RESULT | STANDARD |
|---|---|---|---|---|
| CHLORINE CONTENT | | % (m/m) | 0.13 | UNE 32024 |
| ELEMENTAL ANALYSIS | C | % (m/m) | 71.47 | EN 15104 EX |
| | H | | 10.59 | |
| | N | | 0.15 | |
| | S | | 0.13 | |
| HIGHER CALORIFIC VALUE, in dry base | | MJ/Kg | 34.22 | UNE EN 164001 EX |
| LOWER CALORIFIC VALUE, in dry base | | MJ/Kg | 32.05 | |

Example 4. COMP-MA 34

STARTING MATERIALS

40% by weight of PP and LDPE.
30% by weight of sanitary napkins, diapers, bandages.
30% by weight of pine wood shavings.

These materials were processed for 16 minutes at 245°C.

ELEMENTAL ANALYSIS OF THE SRF OBTAINED

| TEST | | UNIT | RESULT | STANDARD |
|---|---|---|---|---|
| CHLORINE CONTENT | | % (m/m) | 0.14 | UNE 32024 |
| ELEMENTAL ANALYSIS | C | % (m/m) | 69.86 | EN 15104 EX |
| | H | | 10.31 | |
| | N | | 0.17 | |
| | S | | 0.05 | |
| HIGHER CALORIFIC VALUE, in dry base | | MJ/Kg | 36.40 | UNE EN 164001 EX |
| LOWER CALORIFIC VALUE, in dry base | | Kcal/Kg | 34.28 | |

Examples 6-10

In the following Examples 6-10 all the processed waste comes from solid urban waste treatment plants.
Example 6 contains 75% by weight of organic fraction that comes from the rejects of the organic waste separation and classification. The remaining 25% by weight corresponds to the inorganic reject fraction obtained from the end of trommel line.
Example 7 contains 100% by weight of the reject organic fraction that comes from the end of line.
Example 8 contains 100% by weight of compost obtained from the organic fraction composting process.
Examples 9 and 10 contain 100% by weight obtained from the organic rejects of the different separation and classification treatments implemented in solid urban waste treatment plants.
All the samples were obtained without needing prior moisture or grain size reduction treatment.
The analyses of the SRF obtained are shown below.

| | | 6 (M0232-11) | 7 (M0233-11) | 8 (M0234-11) | 9 (M0235-11) | 10 (M0236-11) |
|---|---|---|---|---|---|---|
| % organic starting fraction | | 75% | 100% reject fraction | 100% compost | 100% | 100% |
| % inorganic starting fraction | | 25% | 0 | 0 | 0 | 0 |
| Initial moisture Organic phase | | 50 | 40 | 40 | 50 | 50 |
| Initial moisture Inorganic phase | | 15 | -- | -- | -- | -- |
| Higher calorific value (MJ/Kg) | | 20.55 | 17.07 | 12.08 | 12.54 | 13.40 |
| Lower calorific value (MJ/Kg) | | 19.30 | 13.79 | 11.24 | 11.59 | 12.47 |
| Moisture (%) | | 5.2 | 1 | 2.6 | 18.9 | 15.7 |
| Ash (%) | | 26.4 | 45.7 | 45.9 | 37.6 | 41.8 |
| Elemental analysis (%) | C | 42.46 | 35.35 | 28.38 | 30.37 | 29,6 |
| | H | 6.04 | 5.08 | 4.07 | 4.61 | 4.53 |
| | N | 1.06 | 0.77 | 1.67 | 1.61 | 1.5 |
| | S | 0.18 | 0.15 | 0.37 | 0.26 | 0.26 |
| Chlorine (%) | | 0.08 | 0.08 | 0.05 | 0.05 | 0.05 |
| Temperature of processing step (°C) | | 280 | 280 | 280 | 280 | 280 |
| Time of processing step (minutes) | | 15 | 15 | 15 | 15 | 20 |

Examples 11-18

| Temperature of the process | °C | 320 | 300 | 280 | 300 |
|---|---|---|---|---|---|
| Process time | Minutes | 20 | 20 | 20 | 20 |
| **TEST** | | **X11** | **X12** | **X13** | **X14** |
| **COMPOSITION** | | | | | |
| Organic | % by weight | 82.15 | 70.80 | 80.35 | 68.85 |
| Inorganic | % by weight | 17.85 | 29.20 | 19.65 | 31.15 |
| **UNPROCESSED** | | | | | |
| LCV constant volume in dry base | MJ/kg | 16.74 | 17.21 | 16.95 | 23.36 |
| LCV constant volume in wet base | MJ/kg | 3.45 | 3.78 | 3.52 | 4.96 |
| HCV constant volume in dry base | MJ/kg | 17.51 | 18.36 | 17.5 | 24.64 |
| Moisture | % | 63.1 | 60.3 | 61.1 | 53.7 |
| Ash | % | 14.36 | 10.47 | 13.36 | 11.83 |
| Density | kg/m3 | 350 | 240 | 330 | 180 |
| Energy contained | Kwh/t | 957 | 1049 | 976 | 1376 |
| **PROCESSED (SRF)** | | | | | |
| LCV constant volume in dry base | MJ/kg | 17.15 | 16.8 | 17.10 | 22.75 |
| LCV constant volume in wet base | MJ/kg | 13.8 | 14.52 | 13.73 | 20.85 |
| HCV constant volume in dry base | MJ/kg | 18.08 | 17.94 | 18.22 | 23.95 |
| Moisture | % | 5.2 | 3.9 | 6.3 | 2.6 |
| Ash | % | 25.29 | 15.35 | 24.8 | 10.74 |
| Density | kg/m3 | 1,680 | 1,560 | 1,890 | 1,370 |
| Electric consumption (estimated) | Kwh/t | 160 | 148 | 180 | 130 |
| Energy contained | Kwh/t | 3834 | 4034 | 3814 | 5792 |

| | | X15 | X16 | X17 | X18 |
|---|---|---|---|---|---|
| Temperature of the process | °C | 350 | 330 | 300 | 280 |
| Process time | Minutes | 20 | 20 | 15 | 20 |
| **TEST** | | **X15** | **X16** | **X17** | **X18** |
| **COMPOSITION** | | | | | |
| Organic | % by weight | 67.12 | 71.43 | 54.54 | 81.40 |
| Inorganic | % by weight | 32.88 | 28.57 | 45.46 | 18.60 |
| **UNPROCESSED** | | | | | |
| LCV constant volume in dry base | MJ/kg | 25.39 | 21.68 | 29.17 | 16.5 |
| LCV constant volume in wet base | MJ/kg | 5.42 | 4.45 | 6.12 | 3.42 |
| HCV constant volume in dry base | MJ/kg | 26.59 | 23.12 | 30.53 | 17.68 |
| Moisture | % | 48.7 | 49.6 | 46.1 | 56.1 |
| Ash | % | 12.39 | 11.25 | 9.6 | 13.59 |
| Density | kg/m3 | 170 | 190 | 90 | 350 |
| Energy contained | Kwh/t | 1504 | 1234 | 1698 | 949 |
| **PROCESSED (SRF)** | | | | | |
| LCV constant volume in dry base | MJ/kg | 26.21 | 20.93 | 30.86 | 15.72 |
| LCV constant volume in wet base | MJ/kg | 21.68 | 17.86 | 27.6 | 13.9 |
| HCV constant volume in dry base | MJ/kg | 27.47 | 22.17 | 31.9 | 16.63 |
| Moisture | % | 1.4 | 2.9 | 1 | 2.4 |
| Ash | % | 11.48 | 9.87 | 8.79 | 23.16 |
| Density | kg/m3 | 1,410 | 1,480 | 667 | 2,307 |
| Electric consumption (estimated) | Kwh/t | 134 | 141 | 63 | 219 |
| Energy contained | Kwh/t | 6023 | 4962 | 7667 | 3861 |

All the fractions processed in production tests X11 to X18 come integrally from solid urban waste and did not need any prior moisture or grain size reduction treatment. The unprocessed materials and the SRF obtained were analyzed.

In Examples X11 to X18, the results of the energy produced show that, as a result of the process and of the machine of the invention, moisture is removed from the waste and the homogenization thereof is achieved, which allows tripling, on average, the energy which would be obtained from this waste if it was not treated by the homogenization extruder machine proposed herein.

This data is deduced by comparing the LCV with a constant volume in wet base of the processed fractions (SRF) and unprocessed fractions. The unprocessed waste shows an LCV in wet base much lower than the LCV in wet base of the processed waste (SRF) before being subjected to the process of the following invention. This is due to the fact the unprocessed waste contains more moisture and the processing of the waste successfully removes moisture from the end product to a large extent.

All the examples of the present description were performed in a prototype of the homogenization extruder machine, therefore, the person skilled in the art understands that the process times necessary to obtain a homogenous product will depend on the volumetric capacity of the machine, the loading speed of starting materials, the composition of the starting materials and the temperature of the process.

**Claims**

1. A homogenization extruder machine for manufacturing solid recovered fuel comprising a main body (7) provided with a feed opening (6), an extruder screw (9) an outlet (14), a compression cone (11) arranged at the final end of the extruder screw (9) and opening and closing means (12) for opening and closing said outlet (14), **characterized in that** during a material processing step said closing means (12) close said outlet (14) and force the material being processed to go back and resume the processing step over and over again, wherein said material processing step comprises the rotation of the extruder screw (9) which pushes, rubs together, mixes and grinds all the components while said components advance towards the final end of the homogenization extruder machine and the closing means are selected from the group consisting of a cap, a stopper, a valve, and a metal gate.

2. The homogenization extruder machine according to the preceding claim, wherein the opening and closing means (12) for opening and closing the outlet (14) are manual or automated means.

3. The homogenization extruder machine according to the preceding claim, wherein the opening and closing means (12) for opening and closing the outlet (14) are automated by means of a hydraulic, pneumatic or electric system.

4. The homogenization extruder machine according to any of the preceding claims, wherein the opening and closing means for opening and closing the final end comprise a metal gate.

5. The homogenization extruder machine according to any of the preceding claims comprising means for maintaining and controlling the temperature.

6. The homogenization extruder machine according to claim 5, wherein the means for maintaining and controlling the temperature are configured for maintaining and controlling temperature in the area of the extruder screw (9) and/or in the area of the compression cone (11).

7. The homogenization extruder machine according to any of the preceding claims comprising reinforcement means for reinforcing the compression cone.

8. The homogenization extruder machine according to any of the preceding claims, provided with holes and/or grooves for driving a gas present inside the machine to the area of the feed opening (6) of the machine.

9. A process for producing solid recovered fuel **characterized in that** it comprises a step of processing starting materials in the homogenization extruder machine according to any of claims 1-8, at a temperature between 200 and 500°C, wherein the rotating extruder screw pushes, rubs together, mixes and grinds all the components while they advance towards the final end where there are located the compression cone (11) and the outlet (14) which is closed by closing means, forcing the material being processed to go back and resume the processing step over and over again, and wherein the starting materials come from the reject fractions of waste treatments and the combination thereof.

10. The process according to claim 9, further comprising a subsequent step of opening the outlet (14) of the machine by the opening and closing means (12) for the exit of the solid recovered fuel produced.

11. The process according to any of claims 9 or 10, wherein the starting materials are supplied to the machine without first being treated, i.e. without needing a prior treatment to reduce the moisture or grain size of the waste.

**Patentansprüche**

1. Homogenisierungsextrudermaschine zum Herstellen von festem Sekundärbrennstoff, umfassend einen Hauptkörper (7), der mit einer Einfüllöffnung (6), einer Extruderschnecke (9), einem Auslass (14), einem Kompressionskegel (11), der an dem letzten Ende der Extruderschnecke (9) angeordnet ist, und Öffnungs- und Schließmittel (12) zum Öffnen und Schließen des Auslasses (14) versehen ist, **dadurch gekennzeichnet, dass** während eines Materialverarbeitungsschritts die Schließmittel (12) den Auslass (14) schließen und das in Verarbeitung befindliche Material zurück zwingen und den Verarbeitungsschritt immer wieder aufnehmen, wobei der Materialverarbeitungsschritt das Drehen der Extruderschnecke (9) umfasst, die alle Bestandteile schiebt, zerreibt, vermischt und zermahlt, während die Bestandteile in Richtung auf das letzte Ende der Homogenisierungsextrudermachine vorrücken, und die Schließmittel aus der Gruppe ausgewählt werden, die aus einer Kappe, einem Stöpsel, einem Ventil und einem Metallschieber besteht.

2. Homogenisierungsextrudermaschine nach dem vorhergehenden Anspruch, wobei die Öffnungs- und Schließmittel (12) zum Öffnen und Schließen des Auslasses (14) manuelle oder automatisierte Mittel sind.

3. Homogenisierungsextrudermaschine nach dem vorhergehenden Anspruch, wobei die Öffnungs- und Schließmittel (12) zum Öffnen und Schließen des Auslasses (14) anhand eines hydraulischen, pneumatischen oder elektrischen Systems automatisiert sind.

4. Homogenisierungsextrudermaschine nach einem der vorhergehenden Ansprüche, wobei die Öffnungs- und Schließmittel zum Öffnen und Schließen des letzten Endes einen Metallschieber umfassen.

5. Homogenisierungsextrudermaschine nach einem der vorhergehenden Ansprüche, umfassend Mittel zum Bewahren und Regeln der Temperatur.

6. Homogenisierungsextrudermaschine nach Anspruch 5, wobei die Mittel zum Bewahren und Regeln der Temperatur konfiguriert sind, um die Temperatur in dem Bereich der Extruderschnecke (9) und/oder in dem Bereich des Kompressionskegels (11) zu bewahren und zu regeln.

7. Homogenisierungsextrudermaschine nach einem der vorhergehenden Ansprüche, umfassend Verstärkungsmittel zum Verstärken des Kompressionskegels.

8. Homogenisierungsextrudermaschine nach einem der vorhergehenden Ansprüche, ausgestattet mit Löchern und/oder Nuten zum Treiben eines Gases, das in der Maschine vorliegt, bis zu dem Bereich der Einfüllöffnung (6) der Maschine.

9. Prozess zum Produzieren eines festen Sekundärbrennstoffs, **dadurch gekennzeichnet, dass** er einen Schritt des Verarbeitens von Ausgangsstoffen in der Homogenisierungsextrudermaschine nach einem der Ansprüche 1 bis 8 auf einer Temperatur zwischen 200 und 500 °C umfasst, wobei die sich drehende Extruderschnecke alle Bestandteile schiebt, zerreibt, vermischt und zermahlt, während sie in Richtung auf das letzte Ende vorrücken wo sie sich der Kompressionskegel (11) und der Auslass (14), der durch die Schließmittel geschlossen ist, befinden, wobei das in Verarbeitung befindliche Material zurückgezwungen wird und den Verarbeitungsschritt immer wieder aufnimmt, und wobei die Ausgangsstoffe aus den Absonderungen von Abfallverwertung und der Kombination derselben stammen.

10. Prozess nach Anspruch 9, ferner umfassend einen folgenden Schritt des Öffnens des Auslasses (14) der Maschine durch die Öffnungs- und Schließmittel (12) für den Austritt des produzierten festen Sekundärbrennstoffs.

11. Prozess nach einem der Ansprüche 9 oder 10, wobei die Ausgangsstoffen der Maschine zugeführt werden, ohne zuvor behandelt zu werden, d.h. ohne eine vorherige Behandlung zu benötigen, um die Feuchtigkeit oder Korngröße des Abfalls zu reduzieren.

## Revendications

1. Machine extrudeuse d'homogénéisation pour la fabrication d'un carburant solide de récupération comprenant un corps principal (7) pourvu d'une ouverture d'alimentation (6), d'une vis extrudeuse (9) et d'une sortie (14), un cône de compression (11) placé au niveau de l'extrémité terminale de la vis extrudeuse (9) et un moyen d'ouverture et de fermeture (12) pour ouvrir et fermer la dite sortie (14), **caractérisée en ce que** pendant une étape de traitement du matériau le dit moyen de fermeture (12) ferme la dite sortie (14) et force le matériau en cours de traitement à repartir en arrière et à reprendre l'étape de traitement encore et encore, **en ce que** la dite étape de traitement du matériau comprend la rotation de la vis extrudeuse (9) qui pousse, frotte, mélange et broie tous les composants pendant que les dits composants avancent en direction de l'extrémité terminale de la machine extrudeuse d'homogénéisation et le moyen de fermeture est choisi dans le groupe composé d'un capuchon, un bouchon, une valve et une porte métallique.

2. Machine extrudeuse d'homogénéisation selon la revendication précédente, **caractérisée en ce que** le moyen d'ouverture et de fermeture (12) pour ouvrir et fermer la sortie (14) est un moyen manuel ou automatique.

**3.** Machine extrudeuse d'homogénéisation selon la revendication précédente, **caractérisée en ce que** le moyen d'ouverture et de fermeture (12) pour ouvrir et fermer la sortie (14) est automatisé au moyen d'un système hydraulique, pneumatique ou électrique.

**4.** Machine extrudeuse d'homogénéisation selon l'une quelconque des revendications précédentes, **caractérisée en ce que** le moyen d'ouverture et de fermeture pour ouvrir et fermer l'extrémité finale comprend une porte métallique.

**5.** Machine extrudeuse d'homogénéisation selon l'une quelconque des revendications précédentes comprenant un moyen pour maintenir et contrôler la température.

**6.** Machine extrudeuse d'homogénéisation selon la revendication 5, **caractérisée en ce que** le moyen pour maintenir et contrôler la température est configuré pour maintenir et contrôler la température dans la zone de la vis extrudeuse (9) et/ou dans la zone du cône de compression (11).

**7.** Machine extrudeuse d'homogénéisation selon l'une quelconque des revendications précédentes comprenant un moyen de renforcement pour renforcer le cône de compression.

**8.** Machine extrudeuse d'homogénéisation selon l'une quelconque des revendications précédentes, pourvue de trous et/ou de gorges pour conduire un gaz présent à l'intérieur de la machine jusqu'à la zone de l'ouverture d'alimentation (6) de la machine.

**9.** Procédé pour produire un carburant solide de récupération, **caractérisé en ce qu'**il comprend un étape de traitement des matériaux de départ dans la machine extrudeuse d'homogénéisation selon l'une quelconque des revendications 1 à 8, à une température comprise entre 200 et 500°C, **en ce que** la vis extrudeuse en rotation pousse, frotte, mélange et broie tous les composants pendant qu'ils avancent vers l'extrémité terminale où sont situés le cône de compression (11) et la sortie (14) qui est fermée par un moyen de fermeture, forçant le matériau en cours de traitement à repartir en arrière et à reprendre l'étape de traitement encore et encore, et où les matériaux de départ proviennent des fractions rejetées des traitements des déchets et de leur combinaison.

**10.** Procédé selon la revendication 9, comprenant en outre une étape suivante d'ouverture de la sortie (14) de la machine par le moyen d'ouverture et de fermeture (12) pour la sortie du carburant solide de récupération produit.

**11.** Procédé selon l'une quelconque des revendications 9 ou 10, **caractérisé en ce que** les matériaux de départ sont fournis à la machine sans être auparavant traités, c'est-à-dire sans nécessiter un traitement préalable pour réduire l'humidité ou la taille des grains des déchets.

Figure 1

Figure 2

Figure 3

**EP 2 711 411 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2010138514 A
- EP 1502667 A1
- US 6692544 B1
- WO 02051969 A1
- WO 9920717 A1
- GB 2237028 A1
- US 3947255 A
- US 20090039184 A1
- WO 2010033017 A1
- WO 02051969 A
- US 4632795 A